# EUROPEAN PATENT SPECIFICATION

(11) **EP 1 584 207 B1**
(45) Date of publication and mention of the grant of the patent: **28.02.2007**
(21) Application number: 04701993.0
(22) Date of filing: 14.01.2004
(51) Int. Cl.: H04Q 7/22, H04L 12/58

(54) **TELECOMMUNICATIONS SERVICES APPARATUS AND METHOD**
TELEKOMMUNIKATIONSDIENSTEVORRICHTUNG UND -VERFAHREN
APPAREIL ET PROCEDE DE SERVICES DE TELECOMMUNICATIONS

(30) Priority: 14.01.2003 GB 0300781
(43) Date of publication of application: 12.10.2005
(73) Proprietor: INTELLPROP LIMITED, Guernsey, Channel Islands (GB)
(72) Inventor: WILSON, Jeffrey, Fareham, Hampshire PO16 7OH (GB)
(74) Representative: Pilch, Adam John Michael
(86) International application number: PCT/GB2004/000134
(87) International publication number: WO 2004/064423

(56) References cited:
- EP-A- 1 077 563
- WO-A-99/12364
- WO-A-02/054800

## Description

This invention concerns the field of telecommunications and in particular the field of fixed and/or mobile telecommunications including but not limited to GSM, and specifically relates to telecommunications services apparatus and methods.

It is known in mobile telephony implementations for the same telephone number (such as an MSISDN (mobile station ISDN) telephone number) to be usable as an address for both voice calls and text messages, and it is also common that in the event of unsuccessful voice connection means are provided for a voice message to be left.

Surprisingly, in the standard GSM specifications, if it is desired to use a mobile telephone number as a host address, it only supports on-net access, and therefore various solutions have been proposed for all-net access. This has led to a technique commonly known as Virtual Mobile (VM). Virtual Mobile allows text messages addressed to host equipment in a particular network to be sent from any network.

Virtual Mobile works by providing a home location register (HLR) function for, a virtual telephone number, i.e. one that is not necessarily associated with a real physical telephone terminal. The standard routing operations of GSM deliver a call or message to the correct network node by querying the HLR in order to determine the location of a telephone. By arranging for the HLR to respond to queries relating to Virtual Mobile numbers by returning the address of a network node designated for handling Virtual Mobile calls or messages, access to this network node becomes possible from any network.

Virtual Mobile systems to date have been focussed on text connectivity although the technique of voice call re-direction is known. Voice call re-direction allows a normal voice telephone call to be made to a Virtual Mobile number. However the current position of such re-direction techniques is that a voice call is normally redirected to either another telephone for personal answering or, in some cases, is directed to a voice announcement system, which for example may explain the service and prompt the caller to send a text to the Virtual Mobile number to use the service.

It is common at the moment for text messages to be delivered to terminating hosts over IP networks using SMSC (short message service centre) based protocols, although some companies offer email delivery to hosts over the public Internet.

At the same time as these technical developments have been taking place, a change in users' behaviour has also occurred whereby mobile telephone users will typically call or text to a mobile telephone number depending on their personality, mood and circumstances of the moment. The characteristics of text and voice messages are different and each is suited to its own types of communication.

International Patent Application No. WO 99/12364 discloses a mobile communications system in which the addresses of a mobile station and a second party connected to the Internet are converted so that an SMSC receives an allocation request from the mobile station. Since email addresses are associated with mobile telephony addresses, it is possible for a communication from a caller to a mobile telephone address to be delivered by email to the associated email address. The communication is in text message form, and the text message is delivered by email to the associated email address.

International Patent Application No. WO 02/054800 discloses a mobile telecommunications messaging system capable of recording a voice communication and sending a data file representative of at least part of the voice call for at least one of the parties to the call, to an email address.

It is an aim of at least an embodiment of the present invention to improve the utility of third party connectivity by allowing a telephone user to call (i.e. voice) or text a message to a virtual mobile number allowing both to be delivered by email over an Internet.

According to one aspect of the invention there is provided telecommunications services apparatus for use with a telecommunications system, the apparatus being operable to associate an email address with a mobile telephony address, the apparatus comprising means for enabling delivery of an email communication from a caller to the email address associated with the mobile telephony address, wherein when the communication is a text message, the communication enabling means is arranged to deliver the text message by email to the associated email address, characterised in that the mobile telephony address is a virtual mobile address, and when the communication is a voice call, the communication enabling means is arranged to record a voice message that is deliverable as an email attachment to the associated email address, both voice calls and text messages being directed to the same virtual mobile address.

According to another aspect of the invention there is provided a telecommunications services method for use with a telecommunications system, the method associating an email address with a mobile telephony address, the method comprising enabling a communication from a caller to a mobile telephony address to be delivered by email to the associated email address, wherein when the communication is a text message, the text message is deliverable by email to the associated email address, characterised in that the mobile telephony address is a virtual mobile address, and when the communication is a voice call, a voice message is recorded and is deliverable as an email attachment to the associated email address, both voice calls and text messages being directed to the same virtual mobile address.

Further aspects of the invention provide a computer program for carrying out the above method, and a storage medium on which such computer program is stored.

A preferred embodiment of the present invention allows an email address to be associated with a virtual mobile number, and for either a voice call or a text message that has been directed to the virtual mobile number to be delivered by email to the associated email address, respectively as a voice message attachment or as a representation of the text message. Recognising that voice and text communication are each more suited to differing circumstances, a potential sender may therefore be more likely to send a message if both means are always available since he can at any time choose the more appropriate means of communication. Furthermore, offering both methods on the same number makes the situation simpler for the user and reduces barriers to communication. The present technique allows both individuals and organisations to associate an email address with a virtual mobile telephony address, this address being usable as a single contact address for receiving both voice and text communication, the resultant communication being delivered by email.

There is therefore a simple interface for the user, such that they simply call or text to a telephone number associated with an organisation, product etc. and there is also a simple set up means for the organisation, or possibly the individual, to acquire a virtual mobile telephone number, which they may then use for receiving voice or text messages via email.

It is also possible to further extend the utility of the technique by optionally allowing voice calls to be delivered directly at certain times, for example to an agent or switchboard during office hours, and to utilise a means for recording voice messages to be delivered to an email address at other times.

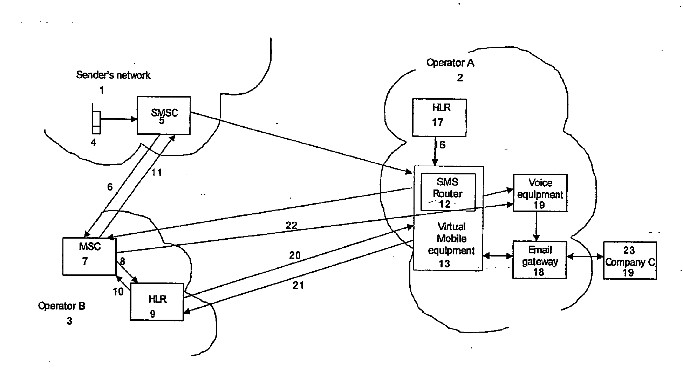

The invention will now be described by way of example with reference to the accompanying single figure drawing which shows a block diagram of telecommunications services apparatus according to an embodiment of the invention.

The virtual mobile function that is utilised by a preferred embodiment of the invention may operate in network A utilising solely MSISDN numbers taken from network A's allocated number ranges. In this case a network B has no involvement in the operation of the technique. Optionally, the virtual mobile function may also operate using MSISDN numbers taken from a network B's allocated number ranges. In this latter case, network A is also providing a virtual mobile service on behalf of network B. Since this is the more general case, the technique will be described on the basis of the two networks A and B. The former case is also covered in the following description by taking network A and network B to be the same network.

The known Location Update method for implementing virtual mobile is used in this example since it is more appropriate for the case where networks A and B are different networks. However if network A and B are the same network then the known internal HLR method or another method may be used instead.

Referring to the drawing, mobile telephone networks including a sender's network (1), a network A (2) and a network B (3) are interconnected. The networks A and B may or may not be the same network, and the sender's network may be any network including networks A or B. A recipient company or organisation C (23) is connected via the public Internet to an email gateway (18) attached to network A.

Network A operates a Virtual Mobile equipment (13), which preferably contains at least one SMS Router (12) as a destination for certain virtual mobile numbers, one or more of which numbers are allocated to services on behalf of network B and other numbers are allocated to services for network A, where these services make use of the present technique and deliver voice and text messages by email. The (or each) SMS Router (12) may, for example, be a Telsis (RTM) SMS Router, manufactured by Telsis Limited. This equipment is capable of connection to mobile telephone networks using known and standardised signalling protocols including SS7 and TCP/IP. Using known signalling routing techniques, the network can arrange for SMS messages directed to the network's SMSCs to be routed via the SMS Router to other destinations.

The Virtual Mobile equipment (13) periodically generates MAP-LOCATION-UPDATE messages for the certain MSISDNs that are associated with network B, and these update network B's HLR (9) to indicate that the location of the virtual mobiles is the SMS Router (12).

When a user (4) sends a text message to one of the virtual mobile numbers associated with network B, his SMSC (5) sends an SRI-SM query (6, 8) that is routed by GSM networks via a mobile switching centre MSC (7) to network B's HLR (9). The response (10,11) to this query (6,8) directs the SMSC (5) to deliver the message to the SMS Router (12) in network A. The Virtual Mobile equipment (13) may then determine that the virtual mobile number used is associated with network B, and convert the message to an email format and deliver it via the email gateway (18). For voice calls from the user (4), network B's HLR (9) sends an MAP-PROVIDE ROAMING NUMBER query (20) to network A's SMS Router (12) and obtains a routing response (21) directing network B to deliver the call (22) to Voice equipment (19) in network A, which may record a message, convert the message to an email format and deliver it via the email gateway (18).

The Virtual Mobile (VM) equipment (13) in the preferred embodiment may be implemented on one or more SMS Routers (12) in network A. Using techniques known in the art and described above, the Virtual Mobile equipment (13) may be arranged to contain the HLR function for the virtual mobile numbers to be used, may implement a Location Update technique using an HLR function in network B, or may implement an HLR function for specific number ranges such as service numbers. If it is desired to implement the technique in network A solely with virtual numbers belonging to network A, then either technique may be used. If it is intended to operate the Virtual Mobile equipment (13) in network A on behalf of network B using virtual numbers from network B's number range, then the Location Update method must be used.

In the following example, the Location Update method is used, allowing the virtual numbers used to belong to any network, including network A, although in the example they are assumed to belong to network B so that the example has the most general applicability, namely network A and network B may be the same network, or different networks.

In order to implement the technique, the Virtual Mobile equipment (13) is configured so that for selected virtual numbers or number ranges belonging to network B, periodic location update messages are generated by the Virtual Mobile equipment (13). These cause the location of these virtual numbers as recorded by network B's HLR (9) to be the SMS Router(s) (12) that form part of the Virtual Mobile equipment (13) in network A. Messages directed to these virtual numbers will then ultimately be routed to the identified equipment in network A. Network A can then implement virtual mobile services on behalf of network B with no changes to network B. It is merely necessary for network B to allocate suitable numbers or number ranges and to provision them onto its HLR(s) (9) in the usual way as for new mobile telephones, such that location update messages will be accepted in the normal way.

When a mobile subscriber sends a text message to one of the virtual mobile numbers associated with network B, his SMSC (5) sends an SRI-SM query that is routed by GSM networks to network B's HLR (9). The response to this query directs the SMSC (5) to deliver the message to the SMS Router (12) in network A. The Virtual Mobile equipment (13) may then determine that the virtual mobile number used is associated with network B, since a network B IMSI is present in the MAP message, and convert the message to an email format and deliver it via the email gateway (18). The Virtual Mobile equipment (13) may maintain a database or lookup table (not shown) relating virtual mobile numbers to IMSIs and to email addresses.

It may be further arranged that voice calls directed to one of these virtual numbers are directed to suitable voice equipment (19) in the following manner. When a voice call is made from any network to one of the virtual mobile numbers associated with network B, an ISUP voice call is routed in the normal manner to arrive at a gateway mobile switching centre MSC in network B. This switch then makes an SRI (Send Routing Information) query to network B's HLR (9). However due to the location updates done by the Virtual Mobile equipment (13) in network A, a PRN (provide roaming number) request will be sent from the HLR (9) to the SMS Router (12) in network A. Network A's Virtual Mobile equipment (13) is operable to allow it to respond to such requests with the MSISDN or directory number of the suitable voice equipment, which is preferably in network A. Network A is then able to handle voice calls to these virtual numbers on behalf of network B, for example to provide announcements, or interactive voice services. Suitable voice equipment (19) would be a Voice Services switch or an IVR (Interactive Voice Response) unit. Preferably the voice equipment (19) is able to record messages from the caller and deliver them by email as an attachment to the email address that is associated with the virtual mobile number used by the caller, or optionally to route a call directly to a destination telephone number associated with the virtual mobile number dialled by the caller according to, for example, time of day or other criterion configured on the system.

Preferably the voice equipment (19) is configured to record voice audio files in a widely used, compressed audio format such as GSM, so that it may be decompressed on a wide range of computer equipment running standard email client software. The compression of the audio yields benefits in storage space required for messages on email systems, and for efficient transmission between subsystems within the mobile and email networks.

Preferably the voice equipment (19) is operable to accept via the email gateway (18), subject to normal security procedures, an audio file that is to be used as the audio prompt to be played to voice callers to the service. In this way, the organisation may update its audio prompt by simply sending an email containing the appropriate audio attachment.

Traditionally, virtual mobile implementations direct text messages via Service Providers attached to SMSCs. With the present technique both voice and text messages may be directed preferably to the same destination, which might not be a Service Provider, but may be the end-customer or organisation. The voice equipment (19) may optionally be configured to route calls through directly during certain hours or to record and email voice messages at other times, and these redirection options are preferably configurable by the end user.

The key advantage of the above-described technique over the prior art is that connectivity is improved. Organisations may now publish just one contact number through which they may receive both voice and text communications. With this technique, organisations that wish to receive text communication no longer need a dedicated connection to a mobile operator, for example by X.25 or TCP/IP that they must rent. Instead they can now opt to receive messages by email, and hence make use of the email facility that they probably already have at no additional cost. Furthermore the same medium can be used to receive recorded voice calls as file attachments. This has an advantage over traditional answering machine and call recording schemes in that the emailed file may be readily archived or forwarded using normal email handling techniques.

Preferably the organisation or individual whose email address is associated with the virtual mobile number is able to self-provision the email address, i.e. to have control of the set-up of the association without recourse to the network operator. This may be achieved by for example sending a text message to the virtual mobile number from a specific CLI, where the content of the text message conforms to a predefined syntax that specifies the email address. Alternatively a voice call could be used, with DTMF detection used to transmit a predefined character coding to specify the email address. Other methods are possible.

The network operator may wish to provide default email addresses for certain users in advance of those users possibly specifying their own chosen email addresses.

Whilst mobile telephone addresses are customarily associated with individuals, it is not customary for mobile telephone addresses to be associated with organisations or companies. Instead these tend to rely on fixed telephone numbers or email addresses for outside contact. It is possible by addition of suitable infrastructure to the fixed network to implement this technique also for fixed network virtual numbers.

Class of service, for example controlling the activation or additional features of the present technique, could be determined according to the CLI of the caller, permitting subscription based services based on the technique to be offered only to certain subscribers.

In so far as the embodiments of the invention described above may be implemented, at least in part, using software-controlled processing apparatus, it will be appreciated that a computer program providing such software control and a storage medium by which such a computer program is stored are envisaged as aspects of the invention.

## Claims

1. Telecommunications services apparatus for use with a telecommunications system, the apparatus being arranged to associate an email address with a mobile telephony address, the apparatus comprising communication enabling means (13,18) for enabling delivery of an email communication from a caller to the email address associated with the mobile telephony address, wherein when the communication is a text message, the communication enabling means (13,18) is arranged to deliver the text message by email to the associated email address, **characterised in that** the mobile telephony address is a virtual mobile address, and when the communication is a voice call, the communication enabling means (13,18) is arranged to record a voice message that is deliverable as an email attachment to the associated email address, both voice calls and text messages being directed to the same virtual mobile address.

2. Apparatus according to claim 1, including storage means for storing mobile telephony addresses and corresponding email addresses.

3. Apparatus according to claim 2, wherein the storage means also stores corresponding international mobile subscriber identifiers IMSI.

4. Apparatus according to claim 1, claim 2 or claim 3, including an interactive voice response unit (19) for recording the voice call.

5. Apparatus according to any one of claims 1 to 4, including means for generating signals indicative of the location of a virtual mobile address whose number is within a number range associated with another telecommunications network, such that a text message to that virtual mobile address is routed to the telecommunications services apparatus.

6. Apparatus according to any one of claims 1 to 5, including virtual mobile equipment (13) for determining which telecommunications network is associated with a particular virtual mobile address.

7. Apparatus according to claim 6, wherein the virtual mobile equipment comprises at least one SMS router (12).

8. A telecommunications services method for use with a telecommunications system, the method associating an email address with a mobile telephony address, the method comprising enabling a communication from a caller to a mobile telephony address to be delivered by email to the associated email address, wherein when the communication is a text message, the text message is deliverable by email to the associated email address, **characterised in that** the mobile telephony address is a virtual mobile address, and when the communication is a voice call, a voice message is recorded and is deliverable as an email attachment to the associated email address, both voice calls and text messages being directed to the same virtual mobile address.

9. A method according to claim 8, including storing mobile telephony addresses and corresponding email addresses.

10. A method according to claim 9, including also storing corresponding international mobile subscriber identifiers IMSI.

11. A method according to claim 8, claim 9 or claim 10, including recording the voice call by means of an interactive voice response unit (19).

12. A method according to any one of claims 8 to 11, including generating signals indicative of the location of a virtual mobile address whose number is within a number range associated with another telecommunications network, such that a text message to that virtual mobile address is routed to the original network.

13. A method according to any one of claims 8 to 12, including virtual mobile equipment (13) for determining which telecommunications network is associated with a particular virtual mobile address.

14. A method according to claim 13, wherein the virtual mobile equipment comprises at least one SMS router (12).

15. A computer program for implementing a method according to any one of claims 8 to 14.

16. A storage medium storing a computer program according to claim 15.

## Patentansprüche

1. Telekommunikationsdienstevorrichtung für die Verwendung mit einem Telekommunikationssystem, wobei die Vorrichtung angeordnet ist, um eine E-Mail-Adresse mit einer Mobiltelefonadresse zu verknüpfen, wobei die Vorrichtung aufweist Einrichtungen zur Ermöglichung der Kommunikation (13, 18) für das Ermöglichen der Zustellung einer E-Mail-Kommunikation von einem Anrufer zu der E-Mail-Adresse, die mit der Mobiltelefonadresse verknüpft ist, wobei, wenn die Kommunikation eine Textnachricht ist, die kommunikationsermöglichende Einrichtung (13, 18) derart ausgelegt ist, daß sie die Textnachricht per E-Mail an die verknüpfte E-Mail-Adresse liefert, **dadurch gekennzeichnet, daß** die Mobiltelefonadresse eine virtuelle Mobiltelefonadresse ist, und, wenn die Kommunikation ein Sprachanruf ist, die kommunikationsermöglichende Einrichtung (13, 18) derart ausgelegt ist, daß sie die Sprachnachricht aufzeichnet, so daß sie als ein E-Mail-Anhang an die verknüpfte E-Mail-Adresse auslieferbar ist, wobei die Sprachanrufe und die Textnachrichten zur selben virtuellen Mobiltelefonadresse geleitet werden.

2. Vorrichtung nach Anspruch 1, die eine Speichereinrichtung beinhaltet für das Speichern von Mobiltelefonadressen und entsprechenden E-Mail-Adressen.

3. Vorrichtung nach Anspruch 2, bei der die Speichereinrichtung ebenso eine entsprechende internationale Mobiltelefonteilnehmeridentifizierer-IMSI speichert.

4. Vorrichtung nach Anspruch 1, Anspruch 2 oder Anspruch 3, die eine interaktive Sprachantworteinheit (19) beinhaltet für das Aufzeichnen des Sprachanrufs.

5. Vorrichtung nach einem der Ansprüche 1 bis 4, einschließlich einer Einrichtung für das Erzeugen von Signalen, die den Ort einer virtuellen Mobiladresseianzeigen, deren Nummer innerhalb eines Nummernbereiches ist, der mit einem anderen Telekommunikationsnetzwerk verknüpft ist, so daß eine Textnachricht zu dieser virtuellen Mobiltelefonadresse zu der Telekommunikationsdienstevorrichtung geroutet wird.

6. Vorrichtung nach einem der Ansprüche 1 bis 5, die ein virtuelles Mobiltelefongerät (13) beinhaltet für das Bestimmen, welches Telekommunikationsnetzwerk mit einer bestimmten virtuellen Mobiltelefonadresse verknüpft ist.

7. Vorrichtung nach Anspruch 6, bei der das virtuelle Mobiltelefongerät zumindest einen SMS-Router (12) aufweist.

8. Telekommunikationsdiensteverfahren für die Verwendung mit einem Telekommunikationssystem, wobei das Verfahren eine E-Mail-Adresse einer Mobiltelefonadresse zuordnet, und, wenn die Kommunikation ein Sprachanruf ist, wird eine Sprachnachricht aufgezeichnet und ist als E-Mail-Anlage an die verknüpfte E-Mail-Adresse lieferbar, wobei sowohl Sprachanrufe als auch Textnachrichten auf dieselbe virtuelle Mobiltelefonadresse geleitet werden.

9. Verfahren nach Anspruch 8, das das Speichern von Mobiltelefonadressen und entsprechenden E-Mail-Adressen beinhaltet.

10. Verfahren nach Anspruch 9, das ebenso das Speichern entsprechender internationaler Mobiltelefonteilnehmeridentifizierer-IMSI beinhaltet.

11. Verfahren nach Anspruch 8, Anspruch 9 oder Anspruch 10, das das Aufzeichnen des Sprachanrufes mittels einer interaktiven Sprachantworteinheit (19) beinhaltet.

12. Verfahren nach einem der Ansprüche 8 bis 11, das das Erzeugen von Signalen beinhaltet, die den Ort einer virtuellen Mobiltelefonadresse anzeigen, deren Nummer innerhalb eines Nummernbereiches liegt, der mit einem anderen Telekommunikationsnetzwerk verknüpft ist, so daß eine Textnachricht zu dieser virtuellen Mobiltelefonadresse zum ursprünglichen Netzwerk geleitet wird.

13. Verfahren nach einem der Ansprüche 8 bis 12, das ein virtuelles Mobiltelefon-Equiprrient (13) beinhaltet für das Bestimmen, welches Telekommunikationsnetzwerk mit einer bestimmten virtuellen Mobiltelefonadresse verknüpft ist.

14. Verfahren nach Anspruch 13, bei dem das virtuelle Mobiltelefon-Equipment zumindest einen SMS-Router (12) aufweist.

15. Computerprogramm für das Implementieren eines Verfahrens nach einem der Ansprüche 8 bis 14.

16. Speichermedium, das ein Computerprogramm nach Anspruch 15 speichert.

## Revendications

1. Appareil de services de télécommunications, destiné à être utilisé avec un système de télécommunications, l'appareil étant conçu pour associer une adresse de courriel avec une adresse de téléphonie mobile, l'appareil comprenant un moyen d'autorisation de communication (13, 18) destiné à autoriser la livraison d'une communication par courriel entre un appelant et une adresse de courriel associée à l'adresse de téléphonie mobile, dans lequel, lorsque la communication est un message de texte, le moyen d'autorisation de communication (13, 18) est conçu pour livrer le message de texte par courriel à l'adresse de courriel associée, **caractérisé en ce que** l'adresse de téléphonie mobile est une adresse mobile virtuelle, et lorsque la communication est un appel vocal, le moyen d'autorisation de communication (13, 18) est conçu pour enregistrer un message vocal qui peut être livré à l'adresse de courriel associée sous la forme d'une pièce jointe de courriel, les appels vocaux et les messages de texte étant tous envoyés à la même adresse mobile virtuelle.

2. Appareil selon la revendication 1, comprenant un moyen de stockage destiné à stocker des adresses de téléphonie mobile et des adresses de courriel correspondantes.

3. Appareil selon la revendication 2, dans lequel le moyen de stockage stocke également des identificateurs internationaux d'abonné mobile - IMSI, pour « *International Mobile Subscriber Identifier »* - correspondants.

4. Appareil selon la revendication 1, la revendication 2 ou la revendication 3, comprenant une unité de réponse vocale interactive (19) destinée à enregistrer l'appel vocal.

5. Appareil selon l'une quelconque des revendications 1 à 4, comprenant un moyen de production de signaux indicatifs de la position d'une adresse mobile virtuelle dont le numéro est compris dans une plage de numéros associée à un autre réseau de télécommunications, si bien qu'un message de texte adressé à cette adresse mobile virtuelle est routé vers l'appareil de services de télécommunications.

6. Appareil selon l'une quelconque des revendications 1 à 5, comprenant un équipement mobile virtuel (13) destiné à déterminer quel est le réseau de télécommunications qui est associé à une adresse mobile virtuelle particulière.

7. Appareil selon la revendication 6, dans lequel l'équipement mobile virtuel comprend au moins un routeur SMS (12).

8. Procédé de services de télécommunications, destiné à être utilisé avec un système de télécommunications, le procédé associant une adresse de courriel avec une adresse de téléphonie mobile, le procédé comprenant l'étape consistant à autoriser qu'une communication entre un appelant et une adresse de courriel associée soit livrée par courriel à l'adresse de courriel associée, dans lequel, lorsque la communication est un message de texte, le message de texte peut être livré par courriel à l'adresse de courriel associée, **caractérisé en ce que** l'adresse de téléphonie mobile est une adresse mobile virtuelle, et lorsque la communication est un appel vocal, un message vocal est enregistré et peut être livré à l'adresse de courriel associée sous la forme d'une pièce jointe de courriel, les appels vocaux et les messages de texte étant tous envoyés à la même adresse mobile virtuelle.

9. Procédé selon la revendication 8, comprenant le stockage des adresses de téléphonie mobile et des adresses de courriel correspondantes.

10. Procédé selon la revendication 9, comprenant en outre le stockage d'identificateurs internationaux d'abonné mobile - IMSI - correspondants.

11. Procédé selon la revendication 8, la revendication 9 ou la revendication 10, comprenant l'enregistrement de l'appel vocal au moyen d'une unité de réponse vocale interactive (19).

12. Procédé selon l'une quelconque des revendications 8 à 11, comprenant la production de signaux indicatifs de la position d'une adresse mobile virtuelle dont le numéro est compris dans une plage de numéros associée à un autre réseau de télécommunications, si bien qu'un message de texte adressé à cette adresse mobile virtuelle est routé vers le réseau original.

13. Procédé selon l'une quelconque des revendications 8 à 12, comprenant un équipement mobile virtuel (13) destiné à déterminer quel est le réseau de télécommunications qui est associé à une adresse mobile virtuelle particulière.

14. Procédé selon la revendication 13, dans lequel l'équipement mobile virtuel comprend au moins un routeur SMS (12).

15. Programme d'ordinateur destiné à mettre en oeuvre un procédé selon l'une quelconque des revendications 8 à 14.

16. Support de stockage stockant un programme d'ordinateur selon la revendication 15.
